# EUROPÄISCHE PATENTANMELDUNG

(11) **EP 4 052 827 A1**
(43) Veröffentlichungstag der Anmeldung: **07.09.2022**
(21) Anmeldenummer: 22165349.6
(22) Anmeldetag: 23.10.2014
(51) Int. Cl.: B23K 1/005, B23K 3/06

(54) **VORRICHTUNG ZUR VEREINZELTEN APPLIKATION VON LOTMATERIALDEPOTS**

(30) Priorität: 19.12.2013 DE 102013114447
(62) Teilanmeldung aus: 14796726.9
(71) Anmelder: Pac Tech - Packaging Technologies GmbH, 14641 Nauen (DE)
(72) Erfinder: AZDASHT, Ghassem, 13591 Berlin (DE)
(74) Vertreter: advotec.

(57) **Zusammenfassung**

Die Erfindung betrifft eine Vorrichtung (10) zur vereinzelten Applikation von Lotmaterialdepots (11), insbesondere Lotkugeln, mit einer Fördereinrichtung (19) zur vereinzelten Förderung der Lotmaterialdepots von einem Lotmaterialreservoir (12) zu einer Applikationseinrichtung (33), wobei die Fördereinrichtung als Durchgangslöcher ausgebildete Transportaufnahmen aufweist, die jeweils von einer Aufnahmeposition, in der ein Lotmaterialdepot aus dem Lotmaterialreservoir aufgenommen wird, in eine Übergabeposition P2 bewegbar sind, in der das Lotmaterialdepot mit Druckgas beaufschlagt wird und aus der das Lotmaterialdepot an eine Applikationsöffnung (37) eines Applikationsmundstücks (36) der Applikationseinrichtung in eine Applikationsposition P3 übergeben wird, wobei eine erste Detektoreinrichtung (69) zur Auslösung einer Beaufschlagung des in der Applikationsposition P3 angeordneten Lotmaterialdepots mit einer von einer Lasereinrichtung emittierten Laserstrahlung und eine zweite Detektoreinrichtung (80) zur Lokalisierung des Lotmaterialdepots vorgesehen sind.

## Beschreibung

Die Erfindung betrifft eine Vorrichtung zur vereinzelten Applikation von Lotmaterialdepots, insbesondere Lotkugeln, mit einer Fördereinrichtung zur vereinzelten Förderung der Lotmaterialdepots von einem Lotmaterialreservoir zu einer Applikationseinrichtung, wobei die Fördereinrichtung als Durchgangslöcher ausgebildete Transportaufnahmen aufweist, die jeweils von einer Aufnahmeposition P1, in der ein Lotmaterialdepot aus dem Lotmaterialreservoir aufgenommen wird, in eine Übergabeposition P2 bewegbar sind, in der das Lotmaterialdepot mit Druckgas beaufschlagt wird und aus der das Lotmaterialdepot an eine Applikationsöffnung eines Applikationsmundstücks der Applikationseinrichtung in eine Applikationsposition P3 übergeben wird.

Eine Vorrichtung der eingangs genannten Art ist aus der DE 195 41 996 A1 bekannt. Diese Vorrichtung weist eine Detektoreinrichtung zur Auslösung einer Beaufschlagung des in der Applikationsposition angeordneten Lotmaterialdepots auf, die als Drucksensor ausgebildet ist. Der Drucksensor erfasst einen sich in einem Applikationskanal ausbildenden Überdruck, der dann entsteht, wenn die Applikationsöffnung durch ein in der Applikationsposition P3 angeordnetes Lotmaterialdepot verschlossen ist. Gesteuert über den Drucksensor erfolgt bei Erreichen eines definierten Schaltdrucks eine Auslösung der Laserbeaufschlagung dann, wenn sich ein Lotmaterialdepot in der Applikationsposition P3 befindet und die Applikationsöffnung blockiert.

In der Verwendung der bekannten Vorrichtung ergibt sich eine eindeutige Applikationsposition des Lotmaterialdepots dadurch, dass das Lotmaterialdepot bereits vor der Beaufschlagung mit Laserstrahlung auf der mit dem Lotmaterialdepot zu versehenden Anschlussfläche eines Substrats aufliegt, so dass die Applikationsöffnung blockiert ist und der Drucksensor ein entsprechendes Sensorausgangssignal zur Auslösung der Laserbeaufschlagung liefert. Die als Drucksensor ausgebildete Detektoreinrichtung der bekannten Vorrichtung dient also sowohl zur Auslösung der Laserbeaufschlagung als auch zur Lokalisierung des Lotmaterialdepots. Die Detektoreinrichtung der bekannten Vorrichtung liefert also in jedem Fall nur die Information, ob sich ein Lotmaterialdepot in der Applikationsposition befindet und daher die Laserbeaufschlagung des Lotmaterialdepots erfolgen kann.

Der vorliegenden Erfindung liegt die Aufgabe zugrunde, eine Vorrichtung der eingangs genannten Art vorzuschlagen, die eine genauere Steuerung der Laserbeaufschlagung ermöglicht.

Die erfindungsgemäße Vorrichtung weist hierzu die Merkmale des Anspruchs 1 auf.

Erfindungsgemäß ist die Vorrichtung mit einer ersten Detektoreinrichtung zur Auslösung einer Beaufschlagung des in der Applikationsposition P3 angeordneten Lotmaterialdepots mit einer von einer Lasereinrichtung emittierten Laserstrahlung und mit einer zweiten Detektoreinrichtung zur Lokalisierung des Lotmaterialdepots versehen.

Die Bereitstellung einer zweiten Detektoreinrichtung, die neben einer ersten Detektoreinrichtung, die zur Auslösung der Laserbeaufschlagung dient, eine von der ersten Detektoreinrichtung unabhängige Information über die Position des Lotmaterialdepots liefert, ermöglicht eine genauere Steuerung der Laserbeaufschlagung, da somit die Art und Weise, in der die Laserbeaufschlagung erfolgt, in Abhängigkeit von der Position des Lotmaterialdepots erfolgen kann.

Bei einer bevorzugten Ausführungsform der erfindungsgemäßen Vorrichtung kommt im Unterschied zu der bekannten Vorrichtung, bei der ein Drucksensor zur Auslösung der Laserbeaufschlagung dient, in der ersten Detektoreinrichtung, die als optische Sensoreinrichtung ausgebildet ist, ein Reflexionssensor zum Einsatz, der die vom Lotmaterialdepot reflektierte Reflexionsstrahlung erfasst, so dass die Lasereinrichtung, die ohnehin als Energiequelle zur Beaufschlagung des Lotmaterialdepots mit Schmelzenergie benutzt wird, gleichzeitig das Medium, nämlich die Laserstrahlung, zur Verfügung stellt, um mit Hilfe des optischen Sensors eine Detektierung des Lotmaterialdepots zu ermöglichen. Als zweite Detektoreinrichtung wird ein Drucksensor verwendet, der jedoch nicht zur Auslösung der Laserbeaufschlagung dient, sondern zur Lokalisierung des Lotmaterialdepots, derart, dass ein hohes Druckausgangssignal des Drucksensors die Information liefert, dass das Lotmaterialdepot die Applikationsöffnung blockiert, also noch innerhalb der Applikationseinrichtung positioniert ist, wohingegen ein niedriges Druckausgangssignal des Drucksensors die Information liefert, dass die Applikationsöffnung frei ist, sich das Lotmaterialdepot also bereits in einer Position auf einer Anschlussfläche eines Substrats befindet.

Im Betrieb der erfindungsgemäßen Vorrichtung wird eine Lasereinrichtung mit mindestens zwei Leistungsstufen betrieben, wobei in einer ersten Leistungsstufe ein so genannter "Pilotstrahl" mit relativ geringer Energiedichte emittiert wird, der bei Auftreffen auf ein in der Applikationsöffnung angeordnetes Lotmaterialdepot die Ausbildung einer Reflexionsstrahlung ermöglicht, die von dem Reflexionssensor erfasst wird. Wenn dann aufgrund der Detektion der Reflexionsstrahlung durch den Reflexionssensor feststeht, dass sich ein Lotmaterialdepot in der Applikationsposition P3 befindet, erfolgt in einer zweiten Leistungsstufe der Lasereinrichtung eine Beaufschlagung des Lotmaterialdepots mit einer Laserstrahlung mit wesentlich erhöhter Energiedichte, die ein zumindest teilweises Aufschmelzen des Lotmaterialdepots und damit ein Austreiben des Lotmaterialdepots aus der Applikationseinrichtung mittels Druckgas ermöglicht. Infolge der Freigabe der Öffnung ergibt sich ein durch den Drucksensor feststellbarer Druckabfall, der den genauen Zeitpunkt der Freigabe der Applikationsöffnung definiert und es somit beispielsweise ermöglicht, den Zusammenhang zwischen Laserleistung und dem Zeitpunkt der Applikation auf der Anschlussfläche zu ermitteln.

Besonders vorteilhaft ist es auch, wenn die erste Detektoreinrichtung zusätzlich zu dem Reflexionssensor, der die von dem in der Applikationsöffnung des Applikationsmundstücks angeordneten Lasermaterialdepot reflektierte Reflexionsstrahlung erfasst, einen optischen Temperatursensor aufweist, der die von dem Lotmaterialdepot emittierte Infrarot-Strahlung erfasst. Durch die Integration des optischen Temperatursensors in die Detektoreinrichtung kann diese nicht nur zur Auslösung der Laserbeaufschlagung des Lotmaterialdepots durch die Lasereinrichtung dienen, sondern auch zur Bestimmung der Temperatur des Lotmaterialdepots. Die Temperatur des Lotmaterialdepots ermöglicht insbesondere gestützt auf eine empirisch ermittelte Korrelation zwischen der Temperatur des Lotmaterialdepots und dessen Schmelzzustand die Optimierung der Einstellung der Parameter der Lasereinrichtung. Wenn nun das entsprechende Temperaturausgangssignal überlagert wird mit dem Druckausgangssignal des Drucksensors der zweiten Detektoreinrichtung, kann beispielweise die Druckgasbeaufschlagung zum Austreiben des Lotmaterialdepots aus der Applikationsöffnung in Abhängigkeit von der Temperatur, also dem Schmelzzustand, des Lotmaterialdepots erfolgen.

Insbesondere dann, wenn der Temperatursensor mit einer Steuereinrichtung der Lasereinrichtung verbunden ist, derart, dass die Steuereinrichtung in Abhängigkeit von einem Temperatursensorausgangssignal den Betrieb der Lasereinrichtung steuert, kann eine optimierte Einstellung der Lasereinrichtung in-situ, also während des Betriebs der Vorrichtung, erfolgen. So kann beispielsweise bei zu hoher Temperatur des Lotmaterialdepots die Leistung der Lasereinrichtung reduziert werden.

In einer bevorzugten Ausführungsform ist die erste Detektoreinrichtung unabhängig von der Applikationseinrichtung ausgebildet und mittels einer Kopplungseinrichtung optisch mit der Applikationsöffnung des Applikationsmundstücks verbunden. Hierdurch ist es möglich, die erste Detektoreinrichtung unabhängig von der Vorrichtung anzuordnen, so dass die erste Detektoreinrichtung nicht notwendigerweise am Gehäuse der Vorrichtung ausgebildet sein muss. Damit kann das Gehäuse und insbesondere die Applikationseinrichtung vergleichsweise einfach ausgestaltet sein.

Als besonders vorteilhaft erweist es sich, wenn die Kopplungseinrichtung sowohl zur optischen Verbindung zwischen der Applikationsöffnung und der ersten Detektoreinrichtung als auch zur optischen Verbindung zwischen der Applikationsöffnung und der Lasereinrichtung dient, so dass aufgrund der Mehrfachfunktion der Kopplungseinrichtung der Aufbau der Vorrichtung weiter vereinfacht werden kann.

Wenn die Kopplungseinrichtung am oberen Ende eines Applikationskanals gegenüberliegend der Applikationsöffnung auf einer Oberseite eines Gehäuseoberteils der Vorrichtung angeordnet ist und sowohl eine transparente Kopplungsfläche zur Herstellung einer optischen Verbindung zwischen der Applikationsöffnung und der Lasereinrichtung als auch eine Strahlumlenkeinrichtung zur Umlenkung der vom Lotmaterialdepot reflektierten Reflexionsstrahlung zur ersten Detektoreinrichtung aufweist, ist zum einen ein kompakter Aufbau der Kopplungseinrichtung gegeben, zum anderen ist die Kopplungseinrichtung exponiert auf der Oberseite des Gehäuses angeordnet, so dass die erste Detektoreinrichtung beliebig in der Peripherie der Vorrichtung angeordnet werden kann.

Ein besonders einfacher Aufbau der Kopplungseinrichtung ergibt sich, wenn die Kopplungsfläche von der Strahlumlenkeinrichtung ausgebildet wird. Insbesondere durch diese Doppelfunktion der Strahlumlenkeinrichtung wird eine Ausbildung einer miniaturisierten Kopplungseinrichtung ermöglicht, was in besonderem Maße einer wünschenswerten Massereduktion der Vorrichtung entgegenkommt.

Eine besonders kompakte und einfache Ausgestaltung der die vorstehend erläuterte Doppelfunktion ermöglichenden Strahlumlenkeinrichtung kann dadurch erfolgen, dass die Strahlumlenkeinrichtung als halbdurchlässiger Spiegel ausgebildet ist, der unter einem Winkel von 45° zur optischen Achse zwischen der Lasereinrichtung und der Applikationsöffnung angeordnet ist.

Es zeigen:
- **Fig. 1**: eine Vorrichtung zur vereinzelten Applikation eines Lotmaterial-depots in isometrischer Darstellung;
- **Fig. 2**: die in **Fig. 1** dargestellte Vorrichtung in einer Schnittdarstellung;
- **Fig. 3**: eine Fördereinrichtung der in **Fig. 2** dargestellten Vorrichtung in Draufsicht;
- **Fig. 4**: eine Draufsicht auf ein Vorrichtungsgehäuse der in den **Fig. 1** und **2** dargestellten Vorrichtung.

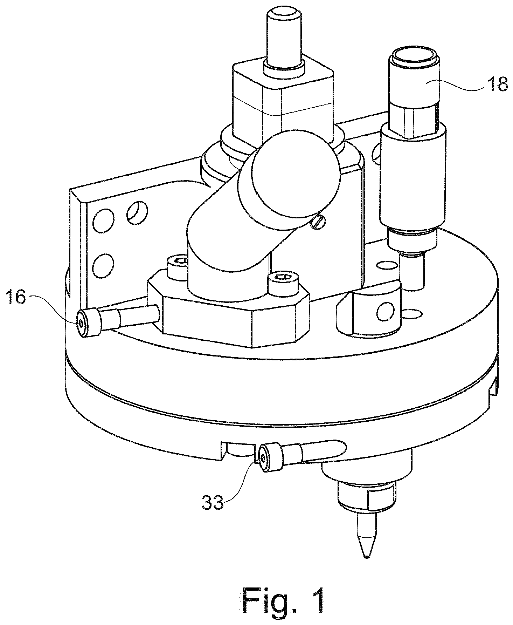

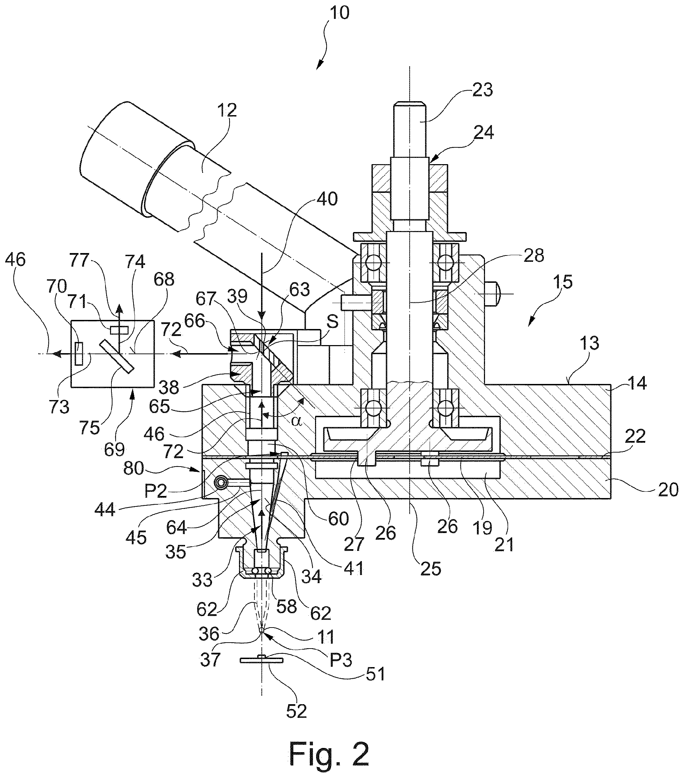

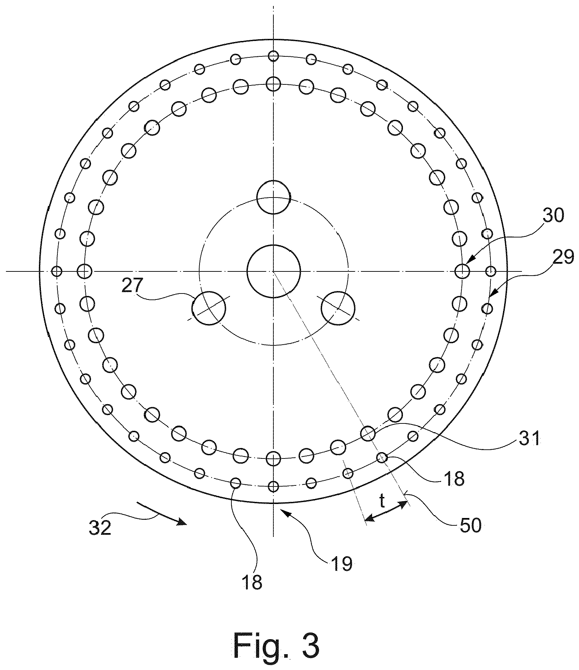

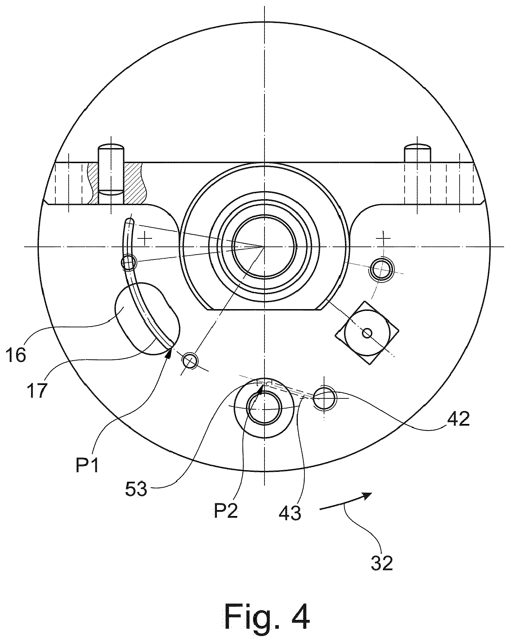

In den **Fig. 1** **und** 2 ist eine Vorrichtung 10 zur vereinzelten Applikation von Lotmaterialdepots 11 dargestellt, wobei die Lotmaterialdepots 11 im vorliegenden Fall als Lotmaterialkugeln ausgebildet sind, die zur Bevorratung in einem Lotmaterialreservoir 12 aufgenommen sind, das auf einer Oberseite 13 eines Gehäuseoberteils 14 eines Vorrichtungsgehäuses 15 angeordnet ist. Im Gehäuseoberteil 14 ist unterhalb einer Anschlussöffnung 16 (**Fig. 4**) ein Lotmaterialkanal 17 ausgebildet, der es ermöglicht, dass, wie in **Fig. 1** dargestellt, Lotmaterialdepots 11 aus dem Lotmaterialreservoir 12 in als Durchgangslöcher ausgebildete Transportaufnahmen 18 (**Fig. 3**) einer als Kreisförderscheibe ausgebildeten Fördereinrichtung 19 gelangen, die zwischen dem Gehäuseoberteil 14 und einem Gehäuseunterteil 20 in einem Kreisförderraum 21 aufgenommen ist. Zur Ausbildung des Kreisförderraums 21 ist zwischen dem Gehäuseoberteil 14 und dem Gehäuseunterteil 20 ein Gehäusering 22 konzentrisch zur Fördereinrichtung 19 angeordnet.

In dem Gehäuseoberteil 14 befindet sich eine an ihrem Antriebsende 23 mit einem hier nicht näher dargestellten Motorantrieb koppelbare Förderwelle 24, die über an ihrem Abtriebsende 25 angeordnete Antriebszapfen 26, die in Eingriffsöffnungen 27 der in **Fig. 3** dargestellten Fördereinrichtung 19 eingreifen, einen Drehantrieb der Fördereinrichtung 19 um eine Rotationsachse 28 ermöglicht.

Wie **Fig. 3** zeigt, weist die Fördereinrichtung 19 zusätzlich zu den Transportaufnahmen 18, die auf einem Förderkreis 29 der Fördereinrichtung 19 äquidistant angeordnet sind, einen Steuerkreis 30 auf, der konzentrisch und im vorliegenden Fall innerhalb des Förderkreises 29 angeordnet ist und jeweils auf einer gemeinsamen radialen Achse 50 mit den Transportaufnahmen 18 Steuerbohrungen 31 aufweist. Diese Steuerbohrungen 31 wirken mit einer im Vorrichtungsgehäuse 15 angeordneten, hier nicht näher dargestellten Lichtschrankeneinrichtung zusammen und ermöglichen die Steuerung einer getakteten Kreisförderbewegung der Fördereinrichtung 19 um die Rotationsachse 28, derart, dass in Förderrichtung 32 der Fördereinrichtung 19 die Transportaufnahmen 18 aus einer Aufnahmeposition P1 unterhalb des mit dem Lotmaterialreservoir 12 verbundenen Lotmaterialkanals 17 jeweils um eine Teilung t des Förderkreises 29 in die Förderrichtung 32 vorwärts bewegt werden und in eine Übergabeposition P2 gelangen, in der sich die Transportaufnahmen 18 in koaxialer bzw. fluchtender Anordnung mit einem im Gehäuseunterteil 20 ausgebildeten Zuführkanal 41 befinden, der sich von der Übergabeposition P2 zur Applikationseinrichtung 33 erstreckt und mit einem Ausgabeende 34 in einen Applikationskanal 35 der Applikationseinrichtung 33 einmündet.

Wie **Fig. 2** zeigt, weist die Applikationseinrichtung 33 an ihrem unteren Ende ein auswechselbar am Gehäuseunterteil 20 angeordnetes Applikationsmundstück 36 mit einer Applikationsöffnung 37 auf, die im vorliegenden Fall in ihrem Durchmesser kleiner bemessen ist als der Durchmesser der Lotmaterialdepots 11, so dass ein aus der Übergabeposition P2 zum Applikationsmundstück 36 übergebenes Lotmaterialdepot 11 in einer Applikationsposition P3 zur Anlage gegen einen Öffnungsrand der Applikationsöffnung 37 gelangt. Das Applikationsmundstück 36 ist im vorliegenden Fall mittels einer Überwurfmutter 62 mit dem Gehäuseunterteil 20 verschraubt, wobei der Anschluss des Applikationsmundstücks 36 an das Gehäuseunterteil 20 zur Abdichtung gegenüber dem Gehäuseunterteil 20 eine Dichtung 58 aufweist.

Am oberen Ende des Applikationskanals 35 ist an der Oberseite 13 des Vorrichtungsgehäuses 15 eine Kopplungseinrichtung 38 angeordnet, die mit einer transparenten Kopplungsfläche 39 versehen ist. Über die Kopplungsfläche 39 kann eine Beaufschlagung des in der Applikationsposition P3 angeordneten Lotmaterialdepots 11 mit Laserstrahlung 40 erfolgen, die von einer hier nicht näher dargestellten Lasereinrichtung emittiert wird.

Die Kopplungsfläche 39 ist im vorliegenden Fall durch eine Oberseite eines halbdurchlässigen Spiegels 63 ausgebildet, der unter einem Winkel α = 45° auf einer zwischen der Applikationsöffnung 37 und der hier nicht näher dargestellten, die Laserstrahlung 40 emittierenden Lasereinrichtung verlaufenden optischen Achse 64 angeordnet ist.

In der in **Fig. 2** dargestellten Konfiguration der Vorrichtung befindet sich ein Lotmaterialdepot 11 an der Applikationsöffnung 37 in der Applikationsposition P3. Dabei liegt das Lotmaterialdepot 11 an einem inneren Öffnungsrand der Applikationsöffnung 37 auf.

Wie **Fig. 2** zeigt, weist die am oberen Ende des Applikationskanals 35 gegenüberliegend der Applikationsöffnung 37 auf der Oberseite 13 des Gehäuseoberteils 14 angeordnete Kopplungseinrichtung 38 einen koaxial zur optischen Achse 64 angeordneten Strahlungskanal 65 und einen senkrecht zur optischen Achse 64 angeordneten Reflexionskanal 66 auf. Der halbdurchlässige Spiegel 63 ist mit einer, hier durch die Unterseite des Spiegels 63 gebildeten Reflexionsfläche 67 in einem Schnittpunkt S des Reflexionskanals 66 mit dem Strahlungskanal 65 angeordnet. Auf einer unter einem Reflexionswinkel β = 90° zur optischen Achse angeordneten Reflexionsachse 68 ist eine Detektoreinrichtung 69 vorgesehen, die einen Reflexionssensor 70 und einen Temperatursensor 71 aufweist und im vorliegenden Fall unabhängig von dem Vorrichtungsgehäuse 15 ausgebildet ist.

Wenn das in der Applikationsposition P3 angeordnete Lotmaterialdepot 11 mit von der Lasereinrichtung emittierter Laserstrahlung 40 beaufschlagt wird, erfolgt an der Oberfläche des Lotmaterialdepots 11 eine zumindest anteilige Reflexion der Laserstrahlung 40, so dass eine von dem Lotmaterialdepot 11 reflektierte Reflexionsstrahlung 72 auf die Reflexionsfläche 67 des halbdurchlässigen Spiegels 63 reflektiert wird und von dieser längs der Reflexionsachse 68 zur Detektoreinrichtung 69 gelangt, in der mittels eines im vorliegenden Fall ebenfalls als halbdurchlässiger Spiegel 75 ausgebildeten Strahlteilers eine Aufteilung des Reflexionsstrahls 72 in einen auf den Reflexionssensor 70 auftreffenden Reflexionssensorstrahl 73 und einen auf den Temperatursensor 71 auftreffenden Temperatursensorstrahl 74 erfolgt.

Im Betrieb der Vorrichtung wird die Lasereinrichtung in zwei Leistungsstufen betrieben, derart, dass die Laserstrahlung 40 in einer ersten Leistungsstufe als Pilotstrahl mit relativ geringer Energiedichte emittiert wird, der als Reflexionsstrahlung 72 von dem in der Applikationsposition P3 angeordneten Lotmaterialdepot 11 reflektiert wird und als Reflexionssensorstrahl 73 auf den Reflexionssensor 70 auftrifft.

Wenn aufgrund der Detektion der Reflexionsstrahlung 72 durch den Reflexionssensor 70 feststeht, dass sich ein Lotmaterialdepot 11 in der Applikationsposition P3 befindet, erfolgt ausgelöst durch ein Reflexionssensorausgangssignal 76 eine Umschaltung der Lasereinrichtung in die zweite Leistungsstufe, in der die Laserstrahlung 40 als Leistungsstrahlung mit erhöhter Energiedichte emittiert wird. Die Leistungsstrahlung bewirkt ein zumindest teilweises Aufschmelzen des Lotmaterialdepots 11, wobei der in der Reflexionsstrahlung 72 enthaltene Infrarot-Strahlungsanteil von dem Temperatursensor 71 erfasst wird und ein entsprechendes Temperatursensorausgangssignal 77 erzeugt wird. Das Temperatursensorausgangssignal 77 ermöglicht die Bestimmung der Temperatur des Lotmaterialdepots 11, so dass das Temperatursensorausgangssignal 77 beispielsweise dazu verwendet werden kann, je nach Bedarf die Leistung und/oder eine Pulsdauer der Laserstrahlung 40 so einzustellen, dass die gewünschte Temperatur und der gewünschte Schmelzzustand des Lotmaterialdepots 11 erreicht wird.

Das infolge der Laserbeaufschlagung zumindest partiell aufgeschmolzene Lotmaterialdepot 11 wird mittels einer Druckgasbeaufschlagung über den in den Applikationskanal 35 einmündenden Zuführkanal 41 durch die Applikationsöffnung 37 herausgeschleudert und gegen eine Kontaktfläche 51 eines Substrats 52 appliziert.

Dabei kann die Druckgasbeaufschlagung beispielsweise in Abhängigkeit davon erfolgen, dass nach Detektierung eines Lotmaterialdepots in der Applikationsposition P3 durch den Reflexionssensor 70 und nach Ablauf einer vorgegebenen Zeitspanne, in der eine Beaufschlagung des Lotmaterialdepots 11 mit einer Leistungsstrahlung erfolgt, die Druckgasbeaufschlagung ausgelöst wird.

Natürlich ist es auch möglich, die Vorrichtung so zu betreiben, dass die Druckgasbeaufschlagung in Abhängigkeit davon erfolgt, dass über den Temperatursensor 71 ein definierter Schmelzzustand des Lotmaterialdepots 11 festgestellt wird.

Zur Druckgasbeaufschlagung weist das Gehäuseoberteil 14 einen in den **Fig. 1** **und** **4** dargestellten Druckgasanschluss 42 auf, der über einen Druckgaskanal 43 mit einem im Gehäuseoberteil 14 oberhalb der Übergabeposition P2 gegenüberliegend dem oberen Ende des im Gehäuseunterteil 20 ausgebildeten Zuführkanals 41 ausgebildeten Lotmaterialdepot-Aufnahmeraum 53 verbunden ist. Mittels der Druckgasbeaufschlagung des im Lotmaterialdepot-Aufnahmeraum 53 angeordneten Lotmaterialdepots 11 erfolgt auch eine Überführung des Lotmaterialdepots 11 in die Applikationsposition P3 an der Applikationsöffnung 37 des Applikationsmundstücks.

Wie **Fig. 2** weiter zeigt, ist zusätzlich zu der ersten Detektoreinrichtung 69 eine zweite Detektoreinrichtung 80 vorgesehen, die einen Drucksensor 44 aufweist, der über eine Druckbohrung 45 mit einem im Applikationskanal 35 der Applikationseinrichtung 33 zwischen der Applikationsöffnung 37 und einer transparenten gasdichten Blende 60, die an einem unteren axialen Ende eines Gehäuses 46 der Kopplungseinrichtung 38 angeordnet ist, definierten Druckraum 61 verbunden ist. Der Drucksensor 44 erfasst einen im Druckraum 61 entstehenden Druckabfall, der dann entsteht, wenn die Applikationsöffnung 37 nach dem Austreiben des durch die Laserbeaufschlagung zumindest partiell aufgeschmolzenen Lotmaterialdepots 11 wieder frei ist, sich das Lotmaterialdepot 11 also nicht mehr in der Applikationsposition P3, sondern in seiner Kontaktposition auf der Kontaktfläche 51 des Substrats 52 befindet.

In Abhängigkeit von der damit gegebenen Information über die Position des Lotmaterialdepots 11 kann nun eine erneute Laserbeaufschlagung des Lotmaterialdepots 11 erfolgen, wobei eine Beaufschlagung mit dem Pilotstrahl und eine Auswertung des von der ersten Detektoreinrichtung 69 erzeugten Reflexionssensorausgangssignals 76 Rückschlüsse über die Oberflächenform des mit der Kontaktfläche 51 verbundenen Lotmaterialdepots 11 ermöglicht, da das Reflexionsverhalten einer konkaven Oberfläche anders ist als das Reflexionsverhalten einer konvexen Oberfläche. Grundsätzlich ist der Anteil der Reflexionsstrahlung 72, der von einer konkaven Oberfläche des Lotmaterialdepots 11 durch die Applikationsöffnung 37 zurück zur Detektoreinrichtung 69 gelangt, geringer als der Anteil der Reflexionsstrahlung 72, der von einer konvexen Oberfläche des Lotmaterialdepots 11 durch die Applikationsöffnung 37 zurück zur Detektoreinrichtung 69 gelangt.

Die über die Oberflächenform des auf die Kontaktfläche 51 applizierten Lotmaterialdepot 11 erhaltene Information kann dazu verwendet werden, die Laserleistung in der zweiten Leistungsstufe, also wenn der Leistungsstrahl zum Aufschmelzen des in der Applikationsposition P3 in der Applikationsöffnung 37 angeordneten Lotmaterialdepots 11 emittiert wird, so zu verändern, dass nach dem Austreiben des Lotmaterialdepots 11 aus der Applikationsöffnung 37 die gewünschte Oberflächenform des in der Kontaktposition auf der Kontaktfläche applizierten Lotmaterialdepots 11 erreicht wird.

## Patentansprüche

1. Vorrichtung (10) zur vereinzelten Applikation von Lotmaterialdepots (11), insbesondere Lotkugeln,
die Vorrichtung umfassend ein Lotmaterialreservoir (12), eine Applikationseinrichtung (33), eine Lasereinrichtung und eine Fördereinrichtung (19) zur vereinzelten Förderung der Lotmaterialdepots (11) von einem Lotmaterialreservoir (12) zu einer Applikationseinrichtung (33), wobei die Applikationseinrichtung (33) ein Applikationsmundstück (36) aufweist,
wobei die Fördereinrichtung als Durchgangslöcher ausgebildete Transportaufnahmen (18) aufweist, die jeweils von einer Aufnahmeposition P1, in der ein Lotmaterialdepot (11) aus dem Lotmaterialreservoir aufnehmbar ist, in eine Übergabeposition P2 bewegbar sind,
in der das Lotmaterialdepot (11) mit Druckgas beaufschlagbar ist und aus der das Lotmaterialdepot (11) an eine Applikationsöffnung (37) eines Applikationsmundstücks (36) innerhalb der Applikationseinrichtung in eine Applikationsposition P3 übergebbar ist,
wobei eine erste Detektoreinrichtung (69) zur Auslösung einer Beaufschlagung des Lotmaterialdepots (11) mit einer von einer Lasereinrichtung emittierten Laserstrahlung als optische Sensoreinrichtung umfassend einen Reflexionssensor (70) ausgebildet ist,
**dadurch gekennzeichnet,**
**dass** das Applikationsmundstück (36) eine Applikationsöffnung (37) mit einem Öffnungsrand aufweist, wobei der Öffnungsrand eine Anlage innerhalb des Applikationsmundstücks für das Lotmaterialdepot (11) zur Definition der von einer Kontaktposition verschiedenen Applikationsposition P3 ausbildet, wobei das Lotmaterialdepot aus der Applikationsposition P3 in die Kontaktposition auf eine Kontaktfläche (51) eines Substrats (52) übergebbar ist,
wobei durch den Reflexionssensor die von dem Lotmaterialdepot (11) reflektierte Reflexionsstrahlung (72) sowohl in der Applikationsposition P3 zur Auslösung einer Beaufschlagung des in der Applikationsposition P3 angeordneten Lotmaterialdepots mit einer von der Lasereinrichtung emittierten Laserstrahlung als auch in der Kontaktposition zur Bestimmung der Oberflächenform des mit der Kontaktfläche (51) verbundenen Lotmaterialdepots (11) erfassbar und an eine Steuereinrichtung der Lasereinrichtung übermittelbar ist,
und **dass** eine zweite Detektoreinrichtung (80) zur Lokalisierung des Lotmaterialdepots (11) in der Applikationsposition P3 oder der Kontaktposition vorgesehen ist, die einen Drucksensor (44) aufweist, durch den der Gasdruck in einem in der Applikationseinrichtung (33) zwischen der in der Übergabeposition P2 angeordneten Transportaufnahme (18) und der Applikationsöffnung (37) des Applikationsmundstücks (36) ausgebildeten Druckraum (61) messbar ist, und durch den bei Druckabfall im Druckraum (61) der Übertritt des Lotmaterialdepots aus der Applikationsposition P3 in die Kontaktposition an die Steuereinrichtung der Lasereinrichtung übermittelbar ist.

2. Vorrichtung nach Anspruch 1,
**dadurch gekennzeichnet,**
**dass** die erste Detektoreinrichtung (69) zusätzlich zu dem Reflexionssensor (70), der die von dem in der Applikationsöffnung (37) des Applikationsmundstücks (36) angeordneten Lotmaterialdepot (11) reflektierte Reflexionsstrahlung (72) erfasst, einen optischen Temperatursensor (71) aufweist, der die von dem Lotmaterialdepot emittierte Infrarot-Strahlung erfasst.

3. Vorrichtung nach einem der vorangehenden Ansprüche,
**dadurch gekennzeichnet,**
**dass** der Temperatursensor (71) mit einer Steuereinrichtung der Lasereinrichtung verbunden ist, derart, dass die Steuereinrichtung in Abhängigkeit von einem Temperatursensorausgangssignal (77) den Betrieb der Lasereinrichtung steuert.

4. Vorrichtung nach einem der vorangehenden Ansprüche,
**dadurch gekennzeichnet,**
**dass** die erste Detektoreinrichtung (69) unabhängig von der Applikationseinrichtung (33) ausgebildet ist und mittels einer Kopplungseinrichtung (38) optisch mit der Applikationsöffnung (37) des Applikationsmundstücks (36) verbunden ist.

5. Vorrichtung nach Anspruch 4,
**dadurch gekennzeichnet,**
**dass** die Kopplungseinrichtung (38) sowohl zur optischen Verbindung zwischen der Applikationsöffnung (37) und der ersten Detektoreinrichtung (69) als auch zur optischen Verbindung zwischen der Applikationsöffnung und der Lasereinrichtung dient.

6. Vorrichtung nach Anspruch 5,
**dadurch gekennzeichnet,**
**dass** die Kopplungseinrichtung (38) am oberen Ende eines Applikationskanals (35) gegenüberliegend der Applikationsöffnung (37) auf einer Oberseite (13) eines Gehäuseoberteils (14) der Vorrichtung angeordnet ist und sowohl eine transparente Kopplungsfläche (39) zur Herstellung einer optischen Verbindung zwischen der Applikationsöffnung und der Lasereinrichtung als auch eine Strahlumlenkeinrichtung zur Umlenkung der reflektierten Reflexionsstrahlung (72) zur ersten Detektoreinrichtung (69) aufweist.

7. Vorrichtung nach Anspruch 6,
**dadurch gekennzeichnet,**
**dass** die Kopplungsfläche (39) von der Strahlumlenkeinrichtung ausgebildet ist.

8. Vorrichtung nach Anspruch 7,
**dadurch gekennzeichnet,**
**dass** die Strahlumlenkeinrichtung als halbdurchlässiger Spiegel (63) ausgebildet ist, der unter einem Winkel von 45° zur optischen Achse (64) zwischen der Lasereinrichtung und der Applikationsöffnung (37) angeordnet ist.
